Europäisches Patentamt

European Patent Office

Office européen des brevets

(11) Publication number: **0 065 576**
**B1**

(12) **EUROPEAN PATENT SPECIFICATION**

(45) Date of publication of patent specification: **02.05.90**

(21) Application number: **81903071.9**

(22) Date of filing: **18.11.81**

(86) International application number:
**PCT/JP81/00339**

(87) International publication number:
**WO 82/01843 10.06.82 Gazette 82/15**

(51) Int. Cl.⁵: **G 05 B 19/405,** B 23 Q 41/08,
G 05 B 23/02

(54) **MONITORING SYSTEM FOR NUMERICALLY CONTROLLED MACHINE TOOL.**

(30) Priority: **28.11.80 JP 167768/80**

(43) Date of publication of application:
**01.12.82 Bulletin 82/48**

(45) Publication of the grant of the patent:
**02.05.90 Bulletin 90/18**

(84) Designated Contracting States:
**CH DE FR GB LI**

(56) References cited:
**DE-A-2 904 080**
**FR-A-2 431 154**
**US-A-3 641 326**

(73) Proprietor: **FANUC LTD**
**3580, Shibokusa Aza-Komanba Oshino-mura**
**Minamitsuru-gun Yamanashi 401-05 (JP)**

(72) Inventor: **KOMIYA, Hidetsugu**
**17-20, Asahigaoka 1-chome Hino-shi**
**Tokyo 191 (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a numerical control machine tool system.

For realizing unmanned operation of a numerical control machine tool system, it is necessary to monitor whether various equipment constituting the system is operating in conformity with predetermined rules. In a case where any operation against the rule has been detected, an appropriate step such as emergency stop must be taken so as to prevent the equipment from being damaged.

By way of example, a machine tool moves a tool or a table on the basis of a command from a numerical control device (termed "NC") so as to subject a workpiece to machining as programmed. In order to allow the machine tool to perform the predetermined machining on the workpiece on the basis of the command from the NC, feed power, a pneumatic pressure etc. must have proper values. For example, dielectric power must be 1 kW in order to rotate the table, and the pneumatic pressure must be 5 kg/cm$^2$ in order to blow out the air. If the electric power and the pneumatic pressure are less than the aforementioned values, the machine tool cannot operate as commanded. In addition, the operations of various parts of the machine tool are controlled by M function instructions, T function instructions, S function instructions, etc. which are given by the NC. Unless the parts are accurately operating in response to the corresponding instructions, machining control as commanded cannot be carried out. For example, when the periods of time during which the machine operates in response to the M function instructions etc. are much longer than the predetermined periods of time, the machine is not operating correctly, and when outputs resulting from the executions of the M, S, T function instructions etc., e.g., displacement, rotational direction, rotational speed etc. are not as commanded, the machine is operating erroneously. In those cases, not only is the workpiece wasted, but machining efficiency also declines markedly.

It is accordingly required to monitor whether or not the respective parts of the machine tool are normally operating and to stop the machine or issue an alarm in the presence of any abnormality so as to quickly obviate difficulties attributed to the abnormality.

On the other hand, in an NC machine tool associated with a robot wherein the robot performs the loading and unloading of a workpiece, the change of tools, etc., the robot complies with a service request from the NC machine tool side (for example, a workpiece change request M20 or a tool change request M06) to execute for the machine tool the service such as the loading and unloading of workpieces and the change of tools. In this regard, in order to allow the robot to load the workpiece on the chuck of the machine tool (for example, lathe), the lathe must be in the following status: (1) the splash guard of the lathe is in the open state, (2) the chuck is open, (3) the spindle is at a stop, and (4) the tool rest is at a stop in a normal position. It is accordingly desirable to monitor whether or not the above conditions (1)—(4) are fulfilled and to stop the workpiece loading and unloading operation of the robot even when only one condition is not met. In addition to the aforementioned states (1)—(4), the states of the machine tool to be monitored may include the "open/closed" state of a jig, the "retracted/advanced" state of a tail stock, the "unclamped/clamped" state of the tool, etc.

In a prior-art NC machine tool or robot and NC machine tool combination, various status-check signals are transmitted from the NC or robot side to the machine tool through a control interface, while the machine tool receives the status-check signals and then transmits status-signals or data expressive of predetermined states to the NC or the robot as individual control signals. The NC or the robot monitors the machine status with the status signals or data transmitted from the machine, and performs the NC control or the robot service in accordance with this machine status.

In such prior-art system, however, as the states to be monitored increase or the equipment to constitute the NC machine tool system increase, the number of signal lines becomes larger and the connections of cables to be coupled become more complicated. Moreover, the arrangements of the respective equipment and the cable connections differ depending upon what is to be monitored or the degree of monitoring (whether complicated and highly precise monitoring or the minimum required monitoring is performed). Therefore, the system does not readily lend itself to general-purpose use and becomes high in cost.

FR—A—2431154 discloses a data processing arrangement associated with a set of machines and comprising automatic data acquisition terminals and/or command terminals and links between these terminals and with local elements for driving machines with which they are associated, wherein each terminal comprises at least one operator specialised in communication with said local elements and one operator specialised in communication between terminals, the terminals are linked together by a series-type telephone link forming a closed loop and each terminal is linked to a group of local elements by a series-type telephone link, by means of interface units suitable for carrying out parallel/series conversion and electrical adaptation of the local element as a function of the type of data to be acquired or transmitted.

According to the present invention there is provided a numerical control machine tool system including items of equipment comprising a numerical control device and at least one other item of equipment provided so as to operate in association with one another, wherein the respective items of equipment are coupled through a control interface or interfaces for exchanging control information to control the associated operations, and further comprising a monitoring system including at least one monitor interface and a monitor means disposed separately from said control interface or interfaces, at least one of the monitor interfaces having at least one of said items of equipment and the monitor means coupled thereto, the or each item of equipment and the monitor means which are coupled with the monitor interface having respective computers, whereof the computer of the or each item of equipment delivers monitor information expressive of the state of this item of equipment to the coupled monitor interface, and the computer of the monitor means receives the monitor information transmitted through the coupled monitor interface.

An embodiment of the present invention may provide a numerical control machine tool system which can perform highly precise monitoring and reduce the number of signal lines and which does not require that equipment be remodelled irrespective of the monitoring system, and which readily lends itself to general-purpose use. For example, in a numerical control machine tool system wherein L (L≧2) items of equipment of a numerical control device, a machine tool, a robot, etc. which are constructed so as to operate in association are coupled through a control interface or interfaces for exchanging control information to control the associated operations, M-number of monitor interfaces (M≧1) and N-number of monitor means (N≧1) are disposed separately from the control interface or interfaces, and at least one of the M interfaces has at least one of the L items of equipment and at least one of the N monitor means coupled thereto. The equipment and the monitor means which are coupled with the monitor interface have computers, respectively. The computer of the equipment delivers monitor information expressive of the state of this equipment to the coupled monitor interface, and the computer of the monitor means receives the monitor information transmitted through the coupled monitor interface, whereby the machine tool, the robot etc. are controlled in succession. Thus, an embodiment of the present invention may provide a monitoring system for the numerical control machine tool system wherein the hardware need not be remodelled or altered at all even when the states to be monitored increase or when the items of equipment of the system increase and wherein a single data bus suffices for effecting the function of transmitting monitor information.

Brief description of the drawings

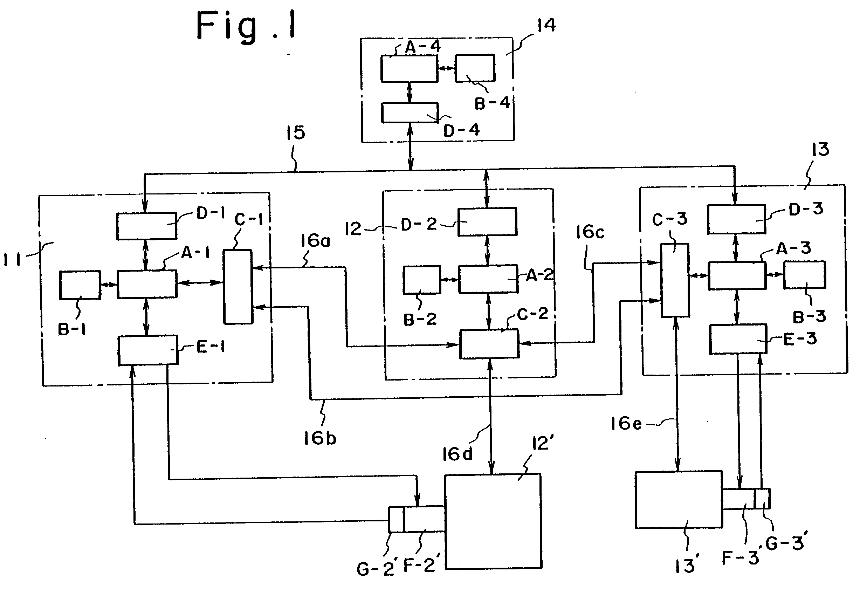

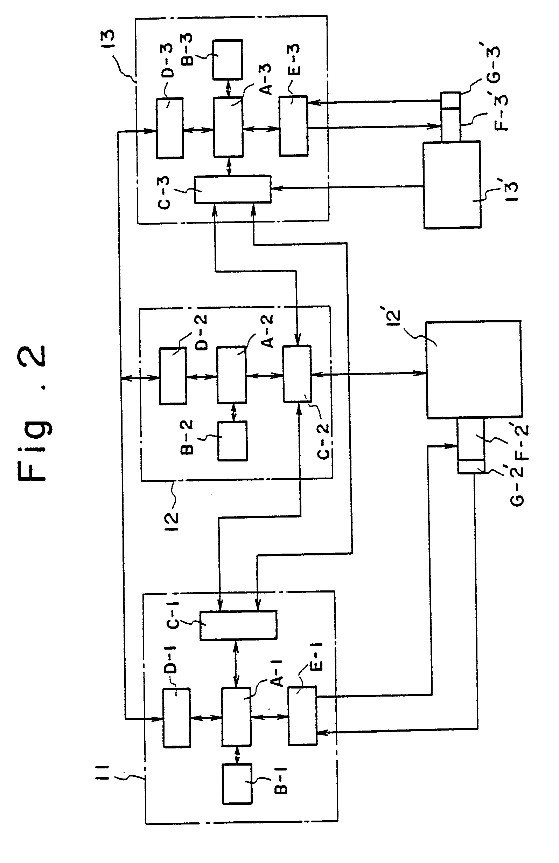

Both Figures 1 and 2 are block diagrams of numerical control machine tool systems to which the system of the present invention is applied.

Examples of the present invention will now be described in detail with reference to the embodiments shown in the accompanying drawings.

Figure 1 is a block diagram of a numerical control machine tool system according to the present invention.

In the figure, numeral 11 designates an NC having a built-in computer and which has the arrangement of the so-called computer NC (CNC). It comprises a processor A-1 which performs predetermined NC control processing in accordance with a control program and a machining program, a control program memory B-1 which stores the control program, a controlling input/output circuit C-1 which exchanges control signals between it and a machine tool controller as well as a robot controller, a monitoring input/output circuit D-1 which receives and delivers monitor information, and a servo control circuit E-1. Machining program data is read from a paper tape, not shown, or from a memory, not shown, for storing the machining program.

Numeral 12 designates the machine tool controller (hereinafter, termed "power sequence controller") having a built-in computer. In response to such control signals as M, S and T function instructions received from the NC 11, or cover "open/close", jig "open/close", chuck "open/close", tail stock "advance/retract" and tool "clamp/unclamp" instructions received from the robot side, the power sequence controller performs predetermined sequence processing and delivers machine control signals to a machine tool thereby causing the machine to execute such operations as spindle "forward rotation/reverse rotation/stop", coolant "on/off", cover "open/close" and chuck "open/close". When the machine operations have ended, the power sequence controller delivers an operation end signal to the NC 11 or the robot controller. The power sequence controller 12 comprises a processor A-2 which performs the predetermined sequence processing and other processing in accordance with a control program, a control program memory B-2 which stores the control program, a controlling input/output circuit C-2 which exchanges control signals with the NC 11 or the robot controller and which delivers the machine control signals to the machine tool, and a monitoring input/output circuit D-2 which receives and delivers monitor information. Symbol 12' denotes the machine tool, which has a D.C. motor F-2' for driving a tool rest (or a table) and a position detector G-2 for detecting the position of the tool rest.

Symbol 13 denotes the robot controller, and symbol 13' a robot. The robot controller 13 has a computer arrangement, and it comprises a processor A-3 which performs teaching and other processing in accordance with a control program and which performs playback processing for some taught contents, a memory B-3 which stores the control program and the taught contents, a controlling input/output circuit C-3 which exchanges control signals with the NC 11 and the power sequence controller 12 and which delivers a hand control signal, a wrist rotation control signal etc. to the robot 13', a monitoring input/output circuit D-3 which receives and delivers monitor information, and a servo circuit E-3 which moves the robot as commanded. The robot 13' has a servomotor F-3' which controls the vertical motion, horizontal turning, expansion and contraction, etc. of an arm, and a position detector G-3' which detects the position of the arm.

Numeral 14 indicates a monitoring device, which has a computer arrangement. It comprises a processor A-4 which performs predetermined monitor processing, a control program memory B-4 which stores a monitoring control program, and a monitoring input/output circuit D-4 which receives and delivers monitor information. Numeral 15 indicates a data bus which transmits the monitor information bidirectionally and by which the monitoring input/output circuits D-1 to D-4 are interconnected. Monitor interfaces are constructed of the circuits D-1 to D-4 and the data bus 15. The monitor information which is transmitted through the monitor interface includes 1) a transmission request signal for requesting the status of each equipment, 2) a signal for identifying the kind of status and data indicative of the status, and 3) a signal expressive of a monitored result. Numerals 16a—16e denote signal lines for transmitting and receiving control signals. The M, S and T function instructions for controlling the machine and the M, S and T end signals are bidirectionally transmitted through the signal line 16a; a robot service request signal, a robot service end signal, etc. are transmitted through the signal line 16b; and the cover "open/close", jig "open/close", chuck "open/close" and the like control signals, operation end signals, etc. are transmitted through the signal line 16c.

Now, the monitoring operation will be described.

Under the control of their control programs, the processors A-1, A-2 and A-3 of the respective items of equipment 11 to 13 set various equipment states required for monitoring, along with state identifier codes, into the unshown registers of the corresponding monitoring input/output circuits D-1 to D-3 at predetermined times, on demand or at need. By way of example, the current position data of the tool rest is set in the monitoring input/output circuit D-1 of the NC 11 at predetermined times. Feed power data, pneumatic pressure data, spindle rotation direction data, spindle rotation/stop data, detected values of sensors mounted on the machine 12', data indicating the open or closed state of a splash guard, data indicating the open or closed state of the chuck, etc. are set in the monitoring input/output circuit D-2 of the power sequence controller 12 at predetermined times. Further, data indicating the current position of the arm and the full opening/full closure of the hand, pneumatic pressure data, etc. are set into the monitoring input/output circuit D-3 of the robot controller 13 at predetermined times.

The processor A-4 reads the status data stored in the monitoring input/output circuits D-1 to D-3 of the respective equipment 11 to 13, along with their identifier codes, through the monitoring input/output circuit D-4 at predetermined time intervals (polling), and it stores them in a data memory, not shown.

Regarding the status data of power, pneumatic pressures, etc., each time the monitoring device 14 reads these status data, it compares them with proper values stored in advance, to examine whether the differences lie within allowable ranges or not. If the range is exceeded, the monitoring device informs the corresponding items of equipment 11—13 of an alarm (monitored result) through the bus 15 so as to stop the numerical control machining or the robot service. Regarding the current position signal of the tool rest and the current position signal of the arm of the robot, each time these current position signals are read, the monitoring device monitors whether the tool rest and the arm have entered predetermined forbidden-entry areas, whether they have made overstrokes, etc., whereupon it provides monitored results.

On the other hand, when the request signal for the loading or unloading of a workpiece is transmitted from the NC 11 to the robot controller 13 through the line 16b, the robot controller 13 sends status data request signals to the monitoring device 14 in succession in order to determine (1) open or closed state of the splash guard, (2) the open or closed state of the chuck, (3) the rotation or stop state of the spindle, and (4) whether or not the tool rest is at a stop in its normal position. Thus, the monitoring device 14 relays the aforementioned states (1)—(4) to the robot controller 13 in succession. The robot controller 13 examines the transmitted states so as to stop the robot until all the four conditions of "splash guard open", "chuck open", "spindle stop" and "stop of the tool rest in the normal position" are met, and to allow the robot to execute the loading or unloading of the workpiece. It is also possible that when the workpiece loading or unloading request signal, the tool change request signal, or the like has been commanded from the NC 11, the monitoring device 14 will monitor whether predetermined conditions are met, whereupon it transmits the monitored results to the robot controller 13.

Figure 2 is a block diagram of another numerical control machine tool system according to the present invention. The independent monitoring device is removed, and the functions of the monitoring device are assigned to the processor A-1, control program memory B-1 and monitoring input/output circuit D-1 of the NC and also a data memory, not shown. In the figure, the same parts as in Figure 1 are assigned the same symbols, and they are not described in detail. The functions of the monitoring device may also be assigned to the power sequence controller 12 or the robot controller 13.

While, in the embodiments, the robot-incorporated NC machine tools have been explained, the present invention is also applicable to a system which consists only of an NC and a machine tool or of an NC and a robot.

As described above, it is only required to dispose a monitoring device and a data bus and to dispose monitoring input/output units within respective equipment. Therefore, even when the number of states to be monitored increase or when the items of equipment of a system increase in number, the hardware need not be remodelled or altered at all, so that the respective equipment lends itself to general purpose use.

Since the single data bus suffices for transmitting monitor information, the number of cables decreases and difficulty in the connections of the cables can be eliminated, so that the cost of the system can be lowered.

## Claims

1. A numerical control machine tool system including items of equipment comprising a numerical control device (11) and at least one other item of equipment (12, 13) provided so as to operate in association with one another, wherein the respective items of equipment (11, 12, 13) are coupled through a control interface or interfaces (C-1, C-2, C-3) for exchanging control information to control the associated operations, and further comprising a monitoring system including at least one monitor interface (15 D-1, 15 D-2, 15 D-3) and a monitor means disposed separately from said control interface or interfaces (C-1, C-2, C-3), at least one of the monitor interfaces (15 D-1, 15 D-2, 15 D-3) having at least one of said items of equipment (11, 12, 13) and the monitor means coupled thereto, the or each item of equipment and the monitor means which are coupled with the monitor interface having respective computers, whereof the computer of the or each item of equipment delivers monitor information expressive of the state of this item of equipment to the coupled monitor interface, and the computer of the monitor means receives the monitor information transmitted through the coupled monitor interface.

2. A system according to claim 1, wherein said at least one monitor interface transmits the monitor information bidirectionally.

3. A system according to claim 1 or 2, wherein said monitor means is a monitoring device (14) separate from the items of equipment (11, 12, 13).

4. A system according to claim 1 or 2, wherein said monitor means is provided by circuitry within one of the items of equipment (11, 12, 13).

5. A system according to any preceding claim, wherein said at least one other item of equipment is or includes a power sequence controller (12) connected to control a machine tool (12').

6. A system according to claim 5, wherein monitored data of the power sequence controller (12) are set in a monitoring input/output circuit (D-2) thereof, to be read by the monitor means.

7. A system according to claim 6, wherein said monitored data of the power sequence controller (12) comprises at least some of feed power data, pneumatic pressure data, spindle rotation direction data, spindle rotation/stop data, detected values of sensors mounted on the machine tool (12'), data indicating the open or closed state of a splash guard, and data indicating the open or closed state of a chuck.

8. A system according to any preceding claim, wherein said at least one other item of equipment is or includes a robot controller (13) connected to control a robot (13').

9. A system according to claim 8, wherein the monitored data of the robot controller (13) are set in a monitoring input/output circuit (D-3) thereof, to be read by the monitor means.

10. A system according to claim 9, wherein said monitored data of the robot controller (13) comprises at least some of data indicating the current position of a robot arm, data indicating the full opening/full closure of a robot hand, and pneumatic pressure data.

11. A system according to any of the preceding claims, wherein the monitor means compares monitored data with proper values therof stored in advance, and takes appropriate action when the differences therebetween lie outside allowable ranges.

12. A system according to claim 8, 9 or 10, when claim 8 is appended to claim 7, wherein when a request signal for the loading or unloading of a workpiece with respect to the machine tool (13') is transmitted from the numerical control device (11) to the robot controller (13), the robot controller (13) sends status data request signals to the monitoring means in succession in order to determine in the machine tool (13') the open or closed state of the splash guard, the open or closed state of the chuck, and the rotation or stop state of the spindle.

13. A system according to any preceding claim, which is an unmanned system.

## Patentansprüche

1. Kontroll-System für eine numerisch gesteuerte Werkzeugmaschine, das Einrichtungseinheiten enthält, die eine numerische Steuereinrichtung (11) und zumindest eine weitere Einrichtungseinheit (12, 13) umfassen, die derart angeordnet sind, daß sie miteinander arbeiten, wobei die betreffenden Einrichtungseinheiten (11, 12, 13) durch eine Steuer-Schnittstellenschaltung oder Steuer-Schnittstellenschaltungen (C-1, C-2, C-3) zum Austauschen von Steuerinformation zur Steuerung gemeinsamer Operationen verbunden sind, und das ferner ein Überwachungssystem umfaßt, das zumindest eine Überwachungsmittel-Schnittstellenschaltung (15 D-1, 15 D-2, 15 D-3) und ein Überwachungsmittel umfaßt, das getrennt von der Steuer-Schnittstellenschaltung oder den Steuer-Schnittstellenschaltungen (C-1, C-2, C-3) angeordnet ist, wobei zumindest eine der Überwachungsmittel-Schnittstellenschaltungen (15 D-1, 15 D-2, 15 D-3) mit zumindest einer der Einrichtungseinheiten (11, 12, 13) und dem Überwachungsmittel verbunden ist und wobei die oder jede Einrichtungseinheit und das Überwachungsmittel, welche mit der Überwachungsmittel-Schnittstellenschaltung verbunden sind, jeweilige Rechner haben, wobei der Rechner der oder jeder Einrichtungseinheit Überwachungsinformation, die bezeichnend für den Zustand dieser Einrichtungseinheit ist, an die angeschlossene Überwachungsmittel-Schnittstellenschaltung ausgibt und der Rechner des Überwachungsmittels die Überwachungsinformation empfängt, die durch die angeschlossene Überwachungsmittel-Schnittstellenschaltung übertragen wird.

2. System nach Anspruch 1, bei dem die zumindest eine Überwachungsmittel-Schnittstellenschaltung die Überwachungsinformation bidirektional überträgt.

3. System nach Anspruch 1 oder 2, bei dem das Überwachungsmittel eine Überwachungseinrichtung (14) ist, die von den Einrichtungseinheiten (11, 12, 13) getrennt angeordnet ist.

4. System nach Anspruch 1 oder 2, bei das Überwachungsmittel durch eine Schaltungsanordnung innerhalb einer der Einrichtungseinheiten (11, 12, 13) vorgesehen ist.

5. System nach einem der vorhergehenden Ansprüche, bei dem die zumindest eine weitere Einrichtungseinheit eine Leistungs-Ablauffolgesteuereinrichtung (12) ist oder eine solche enthält, die angeordnet ist, um eine Werkzeugmaschine (12') zu steuern.

6. System nach Anspruch 5, bei dem überwachte Daten der Leistungs-Ablauffolgesteuereinrichtung (12) in einer überwachenden Eingabe/Ausgabeschaltung (D-2) derselben eingestellt werden, um sie durch das Überwachungsmittel auslesen zu können.

7. System nach Anspruch 6, bei dem die überwachten Daten der Leistungs-Ablauffolgesteuereinrichtung (12) zumindest einige von Vorschubleistungs-Daten, Pneumatikdruck-Daten, Spindel-Drehungsrichtungs-Daten, Spindel-Drehungs/Stopp-Daten, erfaßte Werte von Sensoren, die auf der Werkzeugmaschine (12') montiert sind, Daten, die den geöffneten oder geschlossenen Zustand einer Spritzschutzabdeckung anzeigen, und Daten, die den geöffneten oder geschlossenen Zustand einer Einspannvorrichtung anzeigen, umfassen.

8. System nach einem der vorhergehenden Ansprüche, bei dem die zumindest eine weitere Einrichtungseinheit eine Robotersteuereinrichtung (13) ist oder eine solche enthält, die angeordnet ist, um einen Roboter (13') zu steuern.

9. System nach Anspruch 8, bei dem die überwachten Daten der Robotersteuereinrichtung (13) in einer überwachenden Eingabe/Ausgabeschaltung (D-3) derselben eingestellt werden, um sie durch das Überwachungsmittel auslesen zu können.

10. System nach Anspruch 9, bei dem die überwachten Daten der Robotersteuereinrichtung (13) zumindest einige von Daten, die die Istposition eines Roboterarms anzeigen, Daten, die die vollständige Öffnung/vollständige Schließung einer Roboterhand anzeigen, und Pneumatikdruck-Daten umfassen.

11. System nach einem der vorhergehenden Ansprüche, bei dem das Überwachungsmittel überwachte Daten mit geeigneten Werten derselben, die vorab gespeichert sind, vergleicht und eine zweckmäßige Operation einleitet, wenn die Differenzen zwischen diesen außerhalb zulässiger Bereiche liegen.

12. System nach Anspruch 8, 9 oder 10, wenn Anspruch 8 auf Anspruch 7 rückbezogen ist, bei dem, wenn ein Anforderungssignal für das Laden oder Entladen eines Werkstücks in bezug auf die Werzeugmaschine (12') von der numerischen Steuereinrichtung (11) zu der Robotersteuereinrichtung (13) übertragen wird, die Robotersteuereinrichtung (13) aufeinanderfolgend Zustandsdaten-Anforderungssignale zu dem Überwachungsmittel überträgt, um in der Werkzeugmaschine (12') den geöffneten oder geschlossenen Zustand der Spritzschutzabdeckung, den geöffneten oder geschlossenen Zustand der Einspannvorrichtung und den Drehungs- oder Stoppzustand der Spindel festzustellen.

13. System nach einem der vorhergehenden Ansprüche, das ein unbemanntes System ist.

**Revendications**

1. Un système de machine-outil à commande numérique comportant des éléments d'équipement qui comprennent un dispositif à commande numérique (11) et au moins un autre élément d'équipement (12, 13) prévu de manière à fonctionner en association avec un autre élément, dans lequel les éléments d'équipement (11, 12, 13) respectifs sont accouplés par l'intermédiaire d'une ou plusieurs interfaces de commande (C-1, C-2, C-3) pour échanger des informations de commande devant commander les opérations associées, et comprend en plus un système de contrôle avec au moins une interface de contrôle (15 D-1, 15 D-2, 15 D-3) et un moyen de contrôle monté séparément de ladite ou desdites interfaces de commande (C-1, C-2, C-3), une au moins des interfaces de contrôle (15 D-1, 15 D-2, 15 D-3) comprenant au moins l'un desdits éléments d'équipement (11, 12, 13) et le moyen de contrôle associé à ce dernier, l'élément ou chaque élément d'équipement et le moyen de contrôle qui sont accouplés avec l'interface de contrôle comportant des ordinateurs respectifs, de façon que l'ordinateur de l'élément d'équipement ou de chaque élément d'équipement fournisse des informations de contrôle définissant l'état de cet élément d'équipement pour l'interface de contrôle accouplée, l'ordinateur du moyen de contrôle recevant les informations de contrôle transmises par l'intermédiaire de l'interface de contrôle accouplée.

2. Un système selon la revendication 1, dans lequel ladite interface de contrôle au moins transmet les informations de contrôle dans les deux directions.

3. Un système selon l'une des revendications 1 ou 2, dans lequel ledit moyen de contrôle est un dispositif de contrôle (14) distinct des éléments d'équipement (11, 12, 13).

4. Un système selon l'une des revendications 1 ou 2, dans lequel ledit moyen de contrôle est constitué par des circuits incorporés à l'un des éléments d'équipement (11, 12, 13).

5. Un système selon l'une quelconque des revendications précédentes, dans lequel ledit autre élément d'équipement au moins est ou comporte un contrôleur (12) de séquence de puissance relié pour commander une machine-outil (12').

6. Un système selon la revendication 5, dans lequel des données de contrôle du contrôleur (12) de séquence de puissance sont positionnées dans un circuit (D-2) de contrôle des entrées/sorties de ce dernier, pour être lues par le moyen de contrôle.

7. Un système selon la revendication 6, dans lequel lesdites données contrôlées du contrôleur (12) de séquence de puissance comprennent au moins certaines données de puissance appliquée, données de pression pneumatique, données de sens de rotation de la broche, données de rotation/arrêt de la broche, valeurs détectées de capteurs montés sur la machine-outil (12'), des données signalant l'état ouvert ou fermé d'un capot anti-projection et des données indiquant l'état ouvert ou fermé d'un mandrin.

8. Un système selon l'une quelconque des revendications précédentes, dans lequel ledit autre élément d'équipement au moins est ou comprend un contrôleur de robot (13) relié pour commander un robot (13').

9. Un système selon la revendication 8, dans lequel les données contrôlées du contrôleur de robot (13) sont positionnées dans un circuit (D-3) de contrôle des entrées/sorties de ce dernier, pour être lues par le moyen de contrôle.

10. Un système selon la revendication 9, dans lequel lesdites données contrôlées du contrôleur de robot (13) comprennent au moins certaines données indiquant la position actuelle d'un bras de robot, des données indiquant l'ouverture complète/fermeture complète d'une main de robot, et des données de pression pneumatique.

11. Un système selon l'une quelconque des revendications précédentes, dans lequel le moyen de contrôle compare les données contrôlées à des valeurs correctes de ces données stockées d'avance, et prend une mesure appropriée quand les différences entre elles se situent en dehors de gammes admissibles.

12. Un système selon l'une des revendications 8, 9 ou 10, lorsque la revendication 8 dépend de la revendication 7, dans lequel au moment où un signal de demande de chargement ou de déchargement d'une pièce par rapport à une machine-outil (13') est transmis depuis le dispositif de commande numérique (11) au contrôleur de robot (13), le contrôleur de robot (13) envoie des signaux de demande de données d'état au moyen de contrôle successivement pour déterminer l'état d'ouverture ou de fermeture du capot anti-projection de la machine-outil (13'), l'état ouvert ou fermé du mandrin, et l'état de rotation ou d'arrêt de la broche.

13. Un système selon l'une quelconque des revendications précédentes qui est un système fonctionnant sans opérateur.

Fig.1

EP 0 065 576 B1

# Fig . 2

EP 0 065 576 B1